# EUROPEAN PATENT APPLICATION

(11) **EP 4 524 444 A1**
(43) Date of publication of application: **19.03.2025**
(21) Application number: 23831293.8
(22) Date of filing: 23.06.2023
(51) Int. Cl.: F16L 21/08, F16L 21/02

(54) **RING BODY, PIPE JOINT, AND METHOD FOR JOINING PIPES USING SAID RING BODY**

(30) Priority: 28.06.2022 JP 2022103093
(71) Applicant: Kubota Corporation, Osaka-shi, Osaka 556-8601 (JP)
(72) Inventor: KOMARU, Yuito, Amagasaki-shi, Hyogo 660-0095 (JP); TANAKA, Ryunosuke, Amagasaki-shi, Hyogo 660-0095 (JP); ODA, Keita, Amagasaki-shi, Hyogo 660-0095 (JP)
(74) Representative: Canzler & Bergmeier Patentanwälte Partnerschaft mbB
(86) International application number: PCT/JP2023/023298
(87) International publication number: WO 2024/004851

(57) **Abstract**

This ring body 40 includes: an annular ring body 41 that can be inserted between an inner peripheral surface 22a of a socket protrusion 22 and an outer peripheral surface 3a of a spigot 3; and a plurality of gap maintaining parts 42 that can be inserted between a socket sealing surface 21 and the outer peripheral surface 3a of the spigot 3. The plurality of gap maintaining parts 42 are provided to the ring body 41 with prescribed gaps therebetween in the pipe circumferential direction. The plurality of gap maintaining parts 42 are inserted between the socket sealing surface 21 and the outer peripheral surface 3a of the spigot 3, thereby keeping a gap 52 between the socket sealing surface 21 and the outer peripheral surface 3a of the spigot 3 at a prescribed size at which it is possible to push in a seal ring. A retreat space into which a distal end portion of the compressed seal ring can enter is formed at a location closer to a socket opening end than the ring body 41 between one gap maintaining part 42 and another gap maintaining part 42 that are adjacent.

## Description

### Technical Field

The present invention relates to a ring body provided in a pipe joint having a lock ring and a seal ring, a pipe joint equipped with the ring body, and a method for joining pipes using the ring body.

### Background Art

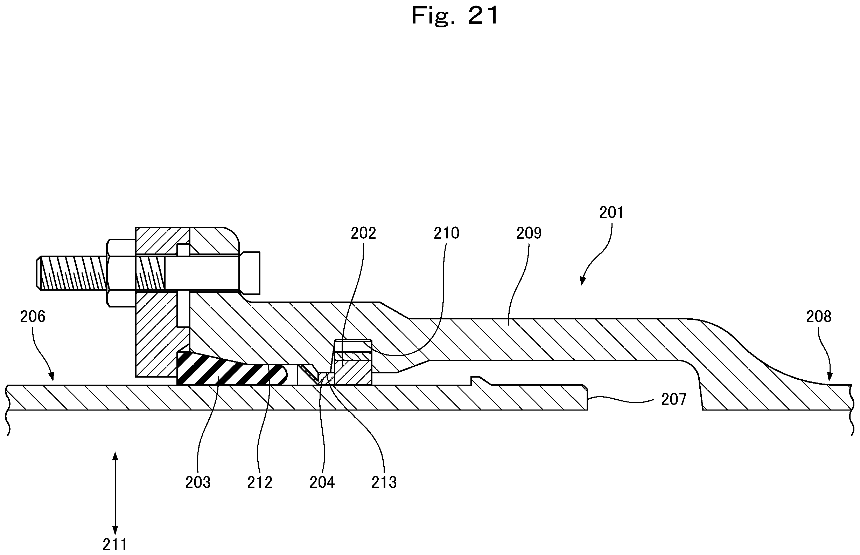

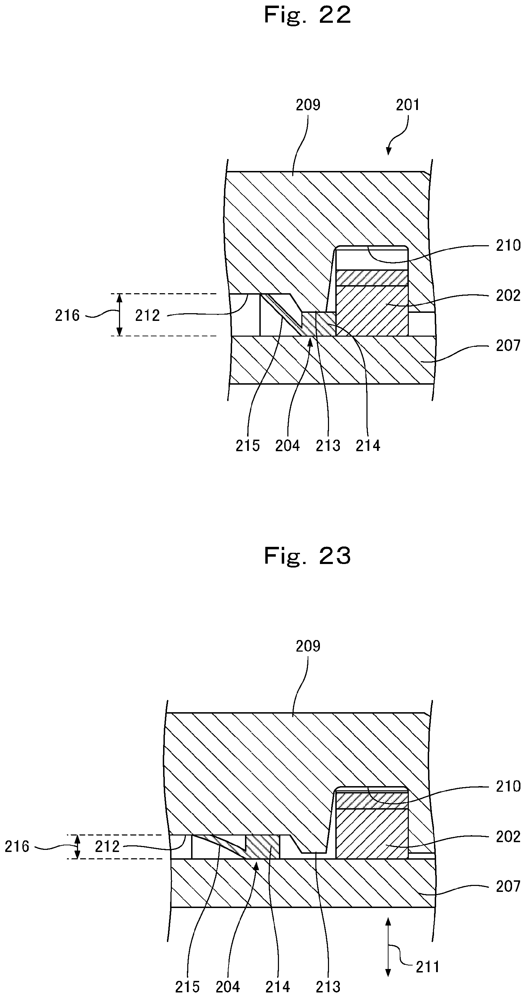

Conventionally, as this type of ring body, a ring body 204 that is provided in a pipe joint 201 is known, as illustrated in Fig. 21 and Fig. 22. In the pipe joint 201, a spigot 207 of a first pipe 206 is inserted into a socket 209 of a second pipe 208. A lock ring 202 is accommodated in a lock ring accommodation groove 210 formed in the inner circumference of the socket 209.

At a location that is closer to an opening end of the socket 209 than the lock ring 202, a seal ring 203 is compressed in a pipe radial direction 211 to seal a space between the outer circumferential surface of the spigot 207 and the inner circumferential surface of the socket 209.

The socket 209 has, at the inner circumference thereof, a socket sealing surface 212 with which the outer circumferential surface of the seal ring 203 contacts with pressure over the entire circumference, and a socket protrusion 213 which protrudes inward in the pipe radial direction from the interior part of the socket sealing surface 212.

The ring body 204 has an annular ring main body portion 214 that can be inserted between the inner circumferential surface of the socket protrusion 213 and the outer circumferential surface of the spigot 207, and a deviation prevention member 215 that prevents the ring main body portion 214 from deviating toward a position closer to the opening end of the socket 209.

When joining the first pipe 206 and the second pipe 208, first, the lock ring 202 is accommodated in the lock ring accommodation groove 210. Next, the spigot 207 is inserted into the socket 209. Thereafter, the ring body 204 is inserted between the socket sealing surface 212 and the outer circumferential surface of the spigot 207 from the opening end of the socket 209, and the ring main body portion 214 of the ring body 204 is pushed in between the inner circumferential surface of the socket protrusion 213 and the outer circumferential surface of the spigot 207.

Thereafter, the seal ring 203 is pushed in between the socket sealing surface 212 and the outer circumferential surface of the spigot 207 from the opening end of the socket 209. At such time, as illustrated in Fig. 22, because the ring main body portion 214 of the ring body 204 is inserted between the inner circumferential surface of the socket protrusion 213 and the outer circumferential surface of the spigot 207, a gap 216 between the socket sealing surface 212 and the outer circumferential surface of the spigot 207 in the pipe radial direction 211 is maintained at a predetermined size that allows the seal ring 203 to be pushed in.

Japanese Patent Laid-Open No. 2021-67282 can be referred to for a description regarding the ring body 204 described above.

### Summary of Invention

### Technical Problem

In the conventional form described above, when joining the first pipe 206 and the second pipe 208, there is a risk that, as illustrated in Fig. 23, the insertion amount of the ring body 204 will be insufficient and consequently the ring main body portion 214 will not reach the space between the inner circumferential surface of the socket protrusion 213 and the outer circumferential surface of the spigot 207 and will instead be set between the socket sealing surface 212 and the outer circumferential surface of the spigot 207 at a location further toward the opening end than the socket protrusion 213. In such case, there will be a place where the gap 216 between the socket sealing surface 212 and the outer circumferential surface of the spigot 207 in the pipe radial direction 211 is narrower than the predetermined size that allows the seal ring 203 to be pushed in. Therefore, there will be a problem that, when pushing the seal ring 203 in between the socket sealing surface 212 and the outer circumferential surface of the spigot 207, the seal ring 203 will be excessively compressed in the pipe radial direction 211, and the operation to push the seal ring 203 in between the socket sealing surface 212 and the outer circumferential surface of the spigot 207 will be difficult.

An object of the present invention is to provide a ring body which, when the ring body is being inserted between a socket sealing surface and the outer circumferential surface of a spigot, even if an insertion amount of the ring body is insufficient, can prevent a seal ring from being excessively compressed in the pipe radial direction by maintaining an interval between the socket sealing surface and the outer circumferential surface of the spigot in the pipe radial direction at an appropriate size that allows the seal ring to be pushed in, and a method for joining pipes using the ring body.

### Solution to Problem

A ring body of the present invention is a ring body to be provided in a pipe joint,
the pipe joint comprising:
a spigot formed in a first pipe;
a socket formed in a second pipe;
a lock ring accommodation groove formed in an inner circumference of the socket;
a lock ring accommodated in the lock ring accommodation groove; and
a seal ring which, at a location that is closer to an opening end of the socket than the lock ring, is compressed in a pipe radial direction to seal a space between an outer circumference of the spigot and the inner circumference of the socket,
the socket having, at the inner circumference, a socket sealing surface with which an outer circumferential surface of the seal ring contacts with pressure over the entire circumference, and a socket protrusion that protrudes inward in the pipe radial direction from a deeper portion of the socket sealing surface,
an inner diameter of the socket sealing surface being larger than an inner diameter of the socket protrusion,
a spigot engagement portion being formed at the outer circumference of the spigot, and
in a state in which the spigot is inserted in the socket, separation of the spigot from the socket can be prevented by the spigot engagement portion being caught on the lock ring from a deeper portion of the socket in a separation direction of the spigot,
the ring body comprising:
   an annular ring main body portion that can be inserted between an inner circumferential surface of the socket protrusion and an outer circumferential surface of the spigot; and
   a plurality of interval maintaining parts that can be inserted between the socket sealing surface and the outer circumferential surface of the spigot, wherein
   the plurality of interval maintaining parts are provided in the ring main body portion at predetermined intervals in a pipe circumference direction,
   by the plurality of interval maintaining parts being inserted between the socket sealing surface and the outer circumferential surface of the spigot, the plurality of interval maintaining parts maintain an interval between the socket sealing surface and the outer circumferential surface of the spigot in the pipe radial direction at a predetermined size that allows the seal ring to be pushed in**,** and
   an escape space into which a distal end portion of the seal ring that is compressed can enter is formed at a location which is between one interval maintaining part and another interval maintaining part that are adjacent in the pipe circumference direction and which is closer to a socket opening end than the ring main body portion.

According to the above configuration, when joining the first pipe and the second pipe, the spigot is inserted into the socket, the ring body is inserted between the socket sealing surface and the outer circumferential surface of the spigot from the opening end of the socket, and the ring main body portion of the ring body is pushed in between the inner circumferential surface of the socket protrusion and the outer circumferential surface of the spigot. By this means, the ring body is mounted at the proper position, the interval maintaining parts of the ring body are arranged between the socket sealing surface and the outer circumferential surface of the spigot, and an interval between the socket sealing surface and the outer circumferential surface of the spigot in the pipe radial direction is maintained at a predetermined size that allows the seal ring to be pushed in.

By this means, when the seal ring is pushed in between the socket sealing surface and the outer circumferential surface of the spigot from the opening end of the socket, the seal ring can be easily pushed in between the socket sealing surface and the outer circumferential surface of the spigot from the opening end of the socket without the seal ring being excessively compressed in the pipe radial direction.

Further, even if the insertion amount of the ring body is insufficient and the ring main body portion does not reach the area between the inner circumferential surface of the socket protrusion and the outer circumferential surface of the spigot and is instead arranged between the socket sealing surface and the outer circumferential surface of the spigot at a location further toward the opening end than the socket protrusion, the interval maintaining parts are arranged between the socket sealing surface and the outer circumferential surface of the spigot. Therefore, the interval between the socket sealing surface and the outer circumferential surface of the spigot in the pipe radial direction is maintained at a predetermined size that allows the seal ring to be pushed in.

By this means, even in a case where the insertion amount of the ring body is insufficient, the seal ring can be easily pushed in between the socket sealing surface and the outer circumferential surface of the spigot from the opening end of the socket without the seal ring being excessively compressed in the pipe radial direction.

Further, in a case where the first pipe and the second pipe are bent and joined, a place arises where the interval between the socket sealing surface and the outer circumferential surface of the spigot in the pipe radial direction becomes narrower than the predetermined size. In this case, even if a portion of the seal ring that is pushed in between the socket sealing surface and the outer circumferential surface of the spigot is excessively compressed in the pipe radial direction, the excessively compressed portion of the seal ring enters the escape space of the ring body, and thus the occurrence of a situation in which the seal ring is pushed in insufficiently can be prevented.

According to the ring body of the present invention, preferably,
an outer diameter of the interval maintaining part is larger than an outer diameter of the ring main body portion,
the interval maintaining part has an engagement surface that is caught on the socket protrusion in an insertion direction of the spigot, and
the engagement surface projects outward in the pipe radial direction from an outer circumferential surface of the ring main body portion.

According to the above configuration, when joining the first pipe and the second pipe, the ring body is inserted between the socket sealing surface and the outer circumferential surface of the spigot from the opening end of the socket, and the ring main body is pushed in between the inner circumferential surface of the socket protrusion and the outer circumferential surface of the spigot. At such time, the engagement surface of the ring body is caught on the socket protrusion in the insertion direction of the spigot so that the ring body is thus arranged at the proper position, and the position of the ring body does not deviate further into a deeper portion of the socket relative to the proper position thereof.

According to the ring body of the present invention, preferably, in a state in which the engagement surface of the interval maintaining part is caught on the socket protrusion, a deeper end of the ring main body portion in a pipe axis direction is positioned closer to the socket opening end than a deeper end of the socket protrusion.

According to the above configuration, when the ring body is set at the proper position, the engagement surface of the interval maintaining part is caught on the socket protrusion, and the deeper end of the ring main body portion is positioned closer to the socket opening end than the deeper end of the socket protrusion. Therefore, contact between the ring main body portion and the lock ring is prevented, and the occurrence of damage to the ring main body portion can be prevented.

A pipe joint that includes the ring body of the present invention has:
a spigot formed in a first pipe;
a socket formed in a second pipe;
a lock ring accommodation groove formed in an inner circumference of the socket;
a lock ring accommodated in the lock ring accommodation groove; and
a seal ring which, at a location that is closer to an opening end of the socket than the lock ring, is compressed in a pipe radial direction to seal a space between an outer circumference of the spigot and the inner circumference of the socket, wherein
the socket has, at the inner circumference, a socket sealing surface with which an outer circumferential surface of the seal ring contacts with pressure over the entire circumference, and a socket protrusion that protrudes inward in the pipe radial direction from a deeper portion of the socket sealing surface,
an inner diameter of the socket sealing surface is larger than an inner diameter of the socket protrusion,
a spigot engagement portion is formed at the outer circumference of the spigot,
in a state in which the spigot is inserted in the socket, separation of the spigot from the socket can be prevented by the spigot engagement portion being caught on the lock ring from a deeper portion of the socket in a separation direction of the spigot, and
the ring body is provided between the lock ring and the seal ring.

According to the pipe joint of the present invention, preferably the first pipe is joined in a straight condition to the second pipe.

According to the pipe joint of the present invention, preferably the first pipe is bent and joined to the second pipe.

According to the pipe joint of the present invention, preferably a clearance is formed between the ring body and the seal ring.

According to the pipe joint of the present invention, preferably the seal ring contacts the ring body.

A method for joining pipes using the ring body of the present invention comprises:
accommodating a lock ring in a lock ring accommodation groove;
inserting a spigot into a socket, and passing a spigot engagement portion into a deeper portion of the socket from a position close to a socket opening end of the lock ring;
inserting the ring body between a socket sealing surface and an outer circumferential surface of the spigot from an opening end of the socket; and
pushing a seal ring in between the socket sealing surface and the outer circumferential surface of the spigot from the opening end of the socket.

According to the above configuration, by inserting the ring body between the socket sealing surface and the outer circumferential surface of the spigot to thereby set the ring body at the proper position, the interval maintaining parts of the ring body are sandwiched between the socket sealing surface and the outer circumferential surface of the spigot, and the interval between the socket sealing surface and the outer circumferential surface of the spigot in the pipe radial direction is maintained at a predetermined size that allows the seal ring to be pushed in.

Even if the insertion amount of the ring body is insufficient, because the interval maintaining parts are sandwiched between the socket sealing surface and the outer circumferential surface of the spigot, the interval between the socket sealing surface and the outer circumferential surface of the spigot in the pipe radial direction is maintained at a predetermined size that allows the seal ring to be pushed in. Thus, the seal ring can be easily pushed in between the socket sealing surface and the outer circumferential surface of the spigot from the opening end of the socket.

### Advantageous Effects of Invention

As described above, according to the present invention, when inserting the ring body between the socket sealing surface and the outer circumferential surface of the spigot, even in a case where the insertion amount of the ring body is insufficient, the interval maintaining parts are sandwiched between the socket sealing surface and the outer circumferential surface of the spigot. Therefore, the interval between the socket sealing surface and the outer circumferential surface of the spigot in the pipe radial direction is maintained at a predetermined size that allows the seal ring to be pushed in. Thus, the seal ring can be easily pushed in between the socket sealing surface and the outer circumferential surface of the spigot.

### Brief Description of Drawings

[Fig. 1] Fig. 1 is a cross-sectional view of a pipe joint in a first embodiment of the present invention, and illustrates a cross section of a gap maintaining part of a ring body.
[Fig. 2] Fig. 2 is a cross-sectional view of the pipe joint in the first embodiment of the present invention, and illustrates a cross section of a ring main body portion of the ring body.
[Fig. 3] Fig. 3 is a view illustrating a lock ring provided in the pipe joint in the first embodiment of the present invention, that illustrates the lock ring at a time when the diameter of the lock ring is expanded.
[Fig. 4] Fig. 4 is a three-dimensional drawing that illustrates the ring body provided in the pipe joint in the first embodiment of the present invention.
[Fig. 5] Fig. 5 is a front view of the ring body provided in the pipe joint in the first embodiment of the present invention.
[Fig. 6] Fig. 6 is a side view of the ring body provided in the pipe joint in the first embodiment of the present invention.
[Fig. 7] Fig. 7 is a cross-sectional view along a line X-X in Fig. 5.
[Fig. 8] Fig. 8 is a perspective view along the direction of arrows Y-Y in Fig. 5.
[Fig. 9] Fig. 9 is a cross-sectional view along a line Z-Z in Fig. 5.
[Fig. 10] Fig. 10 is a partial enlarged cross-sectional view of the pipe joint equipped with the ring body, that illustrates a cross section of the interval maintaining part when the ring body is mounted at the proper position.
[Fig. 11] Fig. 11 is a partial enlarged cross-sectional view of the pipe joint equipped with the ring body, that illustrates a cross section of the ring main body portion when the ring body is mounted at the proper position.
[Fig. 12] Fig. 12 is a view illustrating a method for joining pipes using the ring body, that illustrates a state when the diameter of a lock ring is expanded and a spigot is inserted in a socket.
[Fig. 13] Fig. 13 is a view illustrating the method for joining pipes using the ring body, that illustrates a state when the diameter of the lock ring is reduced to cause the lock ring to cling to the outer circumference of the spigot.
[Fig. 14] Fig. 14 is a view illustrating the method for joining pipes using the ring body, that illustrates a state when the ring body is inserted and is set at the proper position.
[Fig. 15] Fig. 15 is a partial enlarged cross-sectional view of the pipe joint equipped with the ring body, that illustrates a cross section of the interval maintaining part when the insertion amount of the ring body is insufficient.
[Fig. 16] Fig. 16 is a cross-sectional view of a pipe joint in a second embodiment of the present invention.
[Fig. 17] Fig. 17 is a partial enlarged cross-sectional view of the pipe joint equipped with a ring body, that illustrates a state when the ring body is set at the proper position.
[Fig. 18] Fig. 18 is a partial enlarged cross-sectional view of the pipe joint equipped with the ring body, that illustrates a state when a seal ring is pushed in.
[Fig. 19] Fig. 19 is a partial enlarged cross-sectional view of a pipe joint equipped with a ring body in a third embodiment of the present invention, that illustrates a cross section of a gap maintaining part of the ring body.
[Fig. 20] Fig. 20 is a partial enlarged cross-sectional view of the pipe joint equipped with the ring body, that illustrates a cross section of a ring main body portion of the ring body.
[Fig. 21] Fig. 21 is a cross-sectional view of a pipe joint equipped with a conventional ring body.
[Fig. 22] Fig. 22 is a partial enlarged cross-sectional view of the pipe joint equipped with the ring body, that illustrates a state when the ring body is set at the proper position.
[Fig. 23] Fig. 23 is a partial enlarged cross-sectional view of the pipe joint equipped with the ring body, that illustrates a state when the insertion amount of the ring body is insufficient.

### Description of Embodiments

Hereunder, embodiments of the present invention are described with reference to the accompanying drawings.

### (First Embodiment)

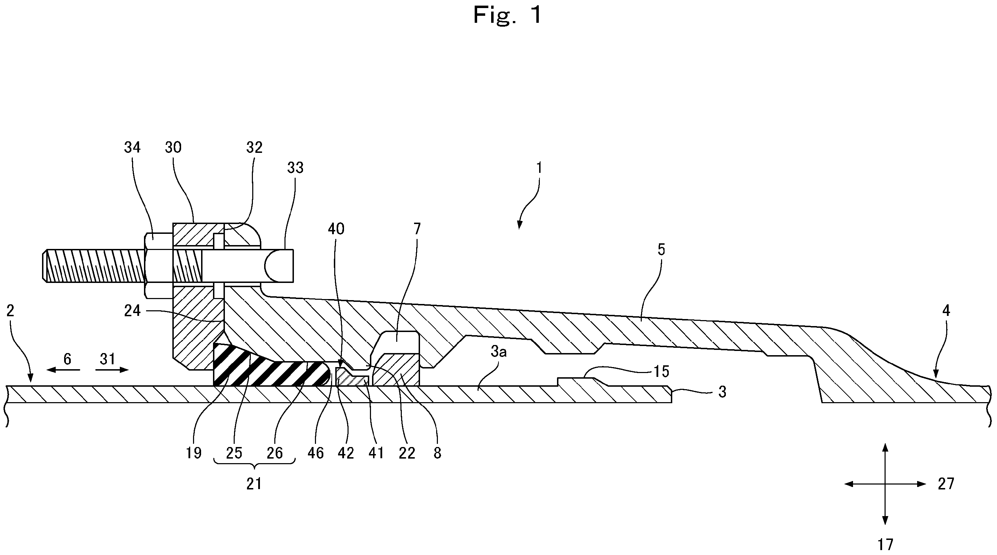

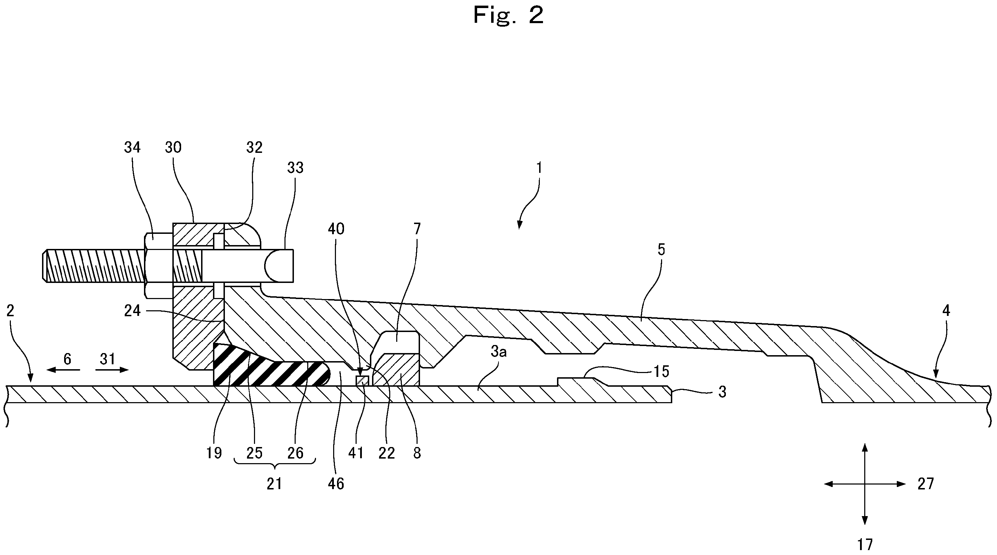

As illustrated in Fig. 1 and Fig. 2, a pipe joint 1 has a spigot 3 formed in a first pipe 2, and a socket 5 formed in a second pipe 4, with the spigot 3 being inserted into the socket 5. For example, ductile iron pipes are used for these pipes 2 and 4.

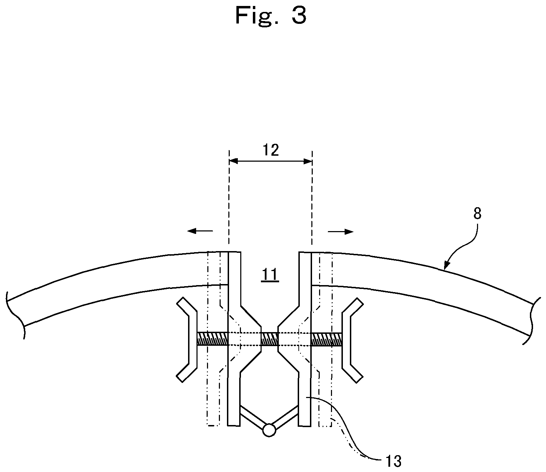

A lock ring accommodation groove 7 is formed over the entire circumference in the inner circumferential surface of the socket 5. A lock ring 8 is accommodated in the lock ring accommodation groove 7. As illustrated in Fig. 3, the lock ring 8 is a ring having a split structure in which one portion has been cut at a location along the circumferential direction. The diameter of the lock ring 8 is expanded by expanding a gap 12 between the cut ends at a cut portion 11 using an expander 13, and the lock ring 8 has elasticity such that its diameter is reduced to return to the original diameter by removing the expander 13 from the cut portion 11.

As illustrated in Fig. 1 and Fig. 2, a spigot protrusion 15 is formed over the entire circumference at the outer circumference of the spigot 3. The spigot protrusion 15 can prevent the spigot 3 from separating from the socket 5 by the spigot protrusion 15 being caught on the lock ring 8 from the socket inner side in a separation direction 6 of the spigot 3.

At a location which is closer to the opening end of the socket 5 than the lock ring 8, a seal ring 19 is provided that is compressed in a pipe radial direction 17 to seal a space between an outer circumferential surface 3a of the spigot 3 and the inner circumferential surface of the socket 5. The seal ring 19 is a ring made of rubber.

The socket 5 has, at the inner circumference thereof, a socket sealing surface 21 with which the outer circumferential surface of the seal ring 19 contacts with pressure over the entire circumference, and a socket protrusion 22 that protrudes inward in the pipe radial direction from a deeper portion of the socket sealing surface 21.

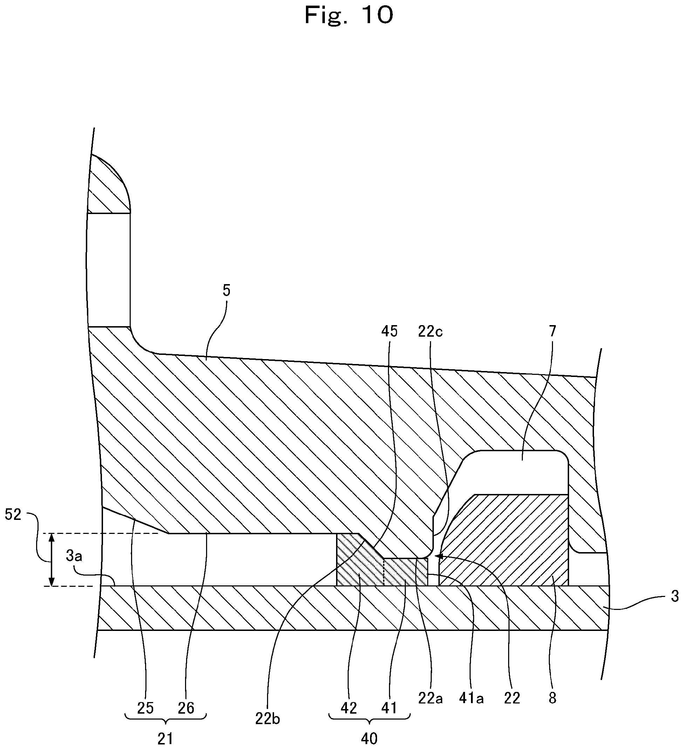

As illustrated in Fig. 1 and Fig. 10, the socket sealing surface 21 has a tapered surface 25 that decreases in diameter gradually from an opening end face 24 of the socket 5 to the inner side, and an inner circumferential surface 26 that extends to the inner side from the deeper end of the tapered surface 25. The inner circumferential surface 26 is formed with a uniform inner diameter in a pipe axis direction 27 and is parallel to the outer circumferential surface 3a of the spigot 3.

The socket protrusion 22 is formed in a circular shape over the entire circumference between the inner circumferential surface 26 of the socket sealing surface 21 and the lock ring accommodation groove 7. The socket protrusion 22 has a first end face 22b that extends from the deeper end of the inner circumferential surface 26 of the socket sealing surface 21 to an inner circumferential surface 22a of the socket protrusion 22, and a second end face 22c that extends from the inner circumferential surface 22a to the lock ring accommodation groove 7.

The first end face 22b of the socket protrusion 22 is a tapered face whose diameter decreases as it approaches the inner circumferential surface 22a of the socket protrusion 22 from the deeper end of the inner circumferential surface 26 of the socket sealing surface 21. Further, the second end face 22c of the socket protrusion 22 is a face which faces toward a deeper portion of the socket 5, and is located at the deeper end of the socket protrusion 22 in the pipe axis direction 27. The inner diameter of the inner circumferential surface 26 of the socket sealing surface 21 is set to a larger diameter than the inner diameter of the socket protrusion 22.

As illustrated in Fig**.** 1 and Fig. 2, a gland 30 that pushes the seal ring 19 into a deeper portion of the socket 5 is provided at the opening end part of the socket 5. The gland 30 has a contact portion 32 that contacts the opening end face 24 of the socket 5 in an insertion direction 31 of the seal ring 19. The gland 30 is connected to the opening end part of the socket 5 by a plurality of bolts 33 and nuts 34.

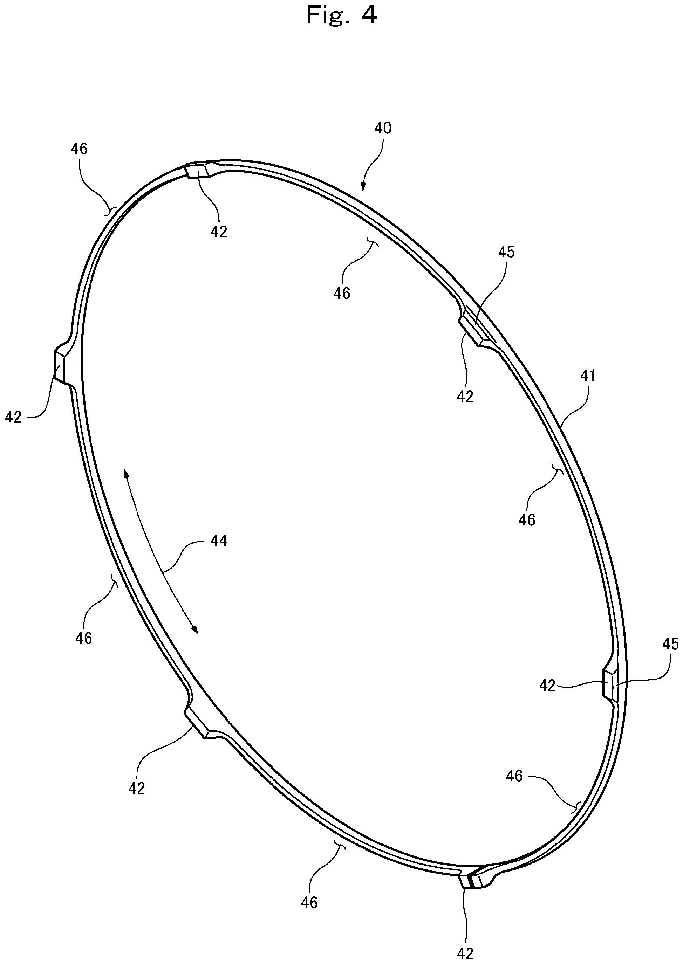

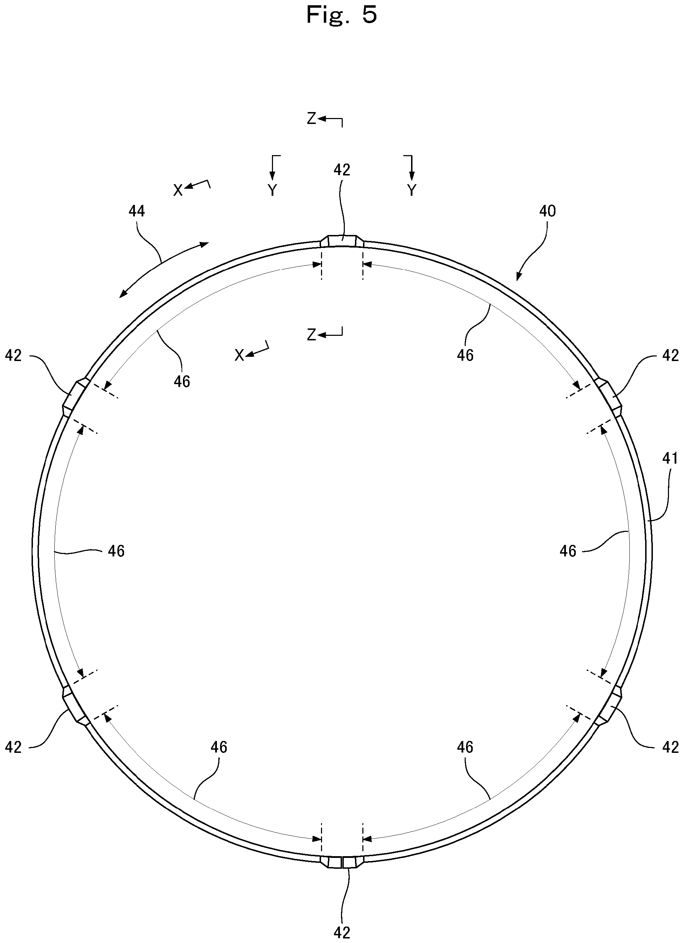

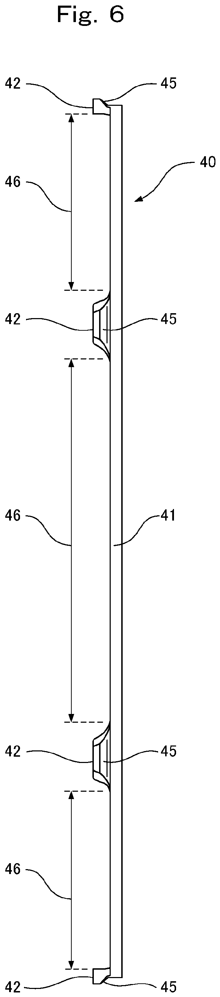

A ring body 40 is provided between the lock ring 8 and the seal ring 19 in the pipe axis direction 27. As illustrated in Fig. 4 to Fig. 6, the ring body 40 is made of a material that has elasticity, such as resin. The ring body 40 has an annular ring main body portion 41 that can be inserted between the inner circumferential surface 22a of the socket protrusion 22 and the outer circumferential surface 3a of the spigot 3, and a plurality of interval maintaining parts 42 that can be inserted between the inner circumferential surface 26 of the socket sealing surface 21 and the outer circumferential surface 3a of the spigot 3. The ring body 40 is a ring having a structure that is split at one location in the circumferential direction, in which any one of the interval maintaining parts 42 is cut at the center.

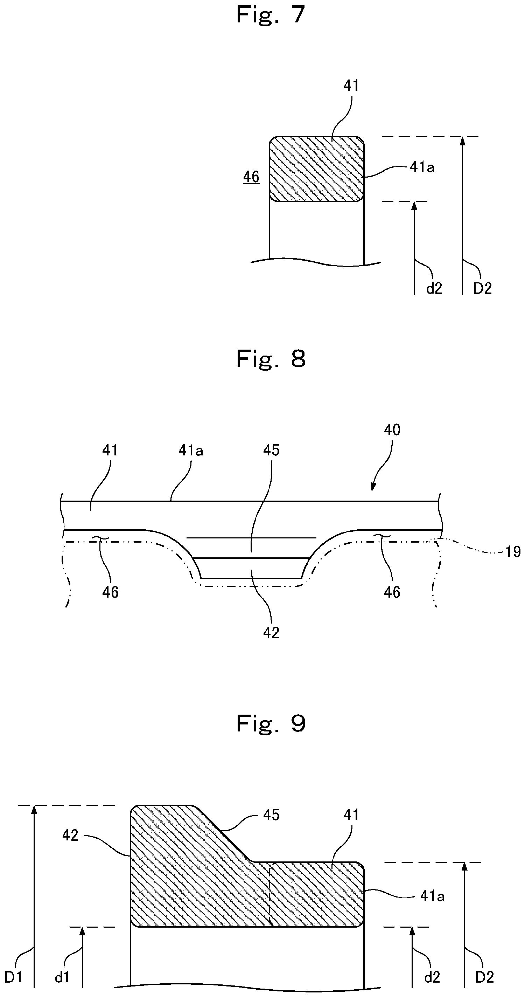

As illustrated in Fig. 7, the ring main body portion 41 has a quadrilateral cross section. Further, as illustrated in Fig. 4 to Fig. 6, the plurality of interval maintaining parts 42 are integrally provided on the ring main body portion 41 at predetermined intervals from each other in a pipe circumference direction 44. As illustrated in Fig. 8 and Fig. 9, the interval maintaining part 42 is a protrusion that protrudes from the ring main body portion 41 at a position toward the socket opening end, and protrudes further outward in the pipe radial direction than the ring main body portion 41. The interval maintaining part 42 has an engagement surface 45 that is caught on the first end face 22b of the socket protrusion 22 in the insertion direction 31 of the spigot **3.**

The engagement surface 45 is a tapered surface that projects outward in the pipe radial direction 17 from the outer circumferential surface of the ring main body portion 41, and whose diameter increases as it approaches the outer circumferential surface of the interval maintaining part 42 from the outer circumferential surface of the ring main body portion 41.

An inner diameter d1 of the interval maintaining part 42 is the same as an inner diameter d2 of the ring main body portion 41. An outer diameter D1 of the interval maintaining part 42 is larger than an outer diameter D2 of the ring main body portion 41.

An escape space 46 into which a distal end portion of the seal ring 19 that is compressed can enter is formed at a location which is between one interval maintaining part 42 and another interval maintaining part 42 that are adjacent in the pipe circumference direction 44 and which is closer to the socket opening end than the ring main body portion 41.

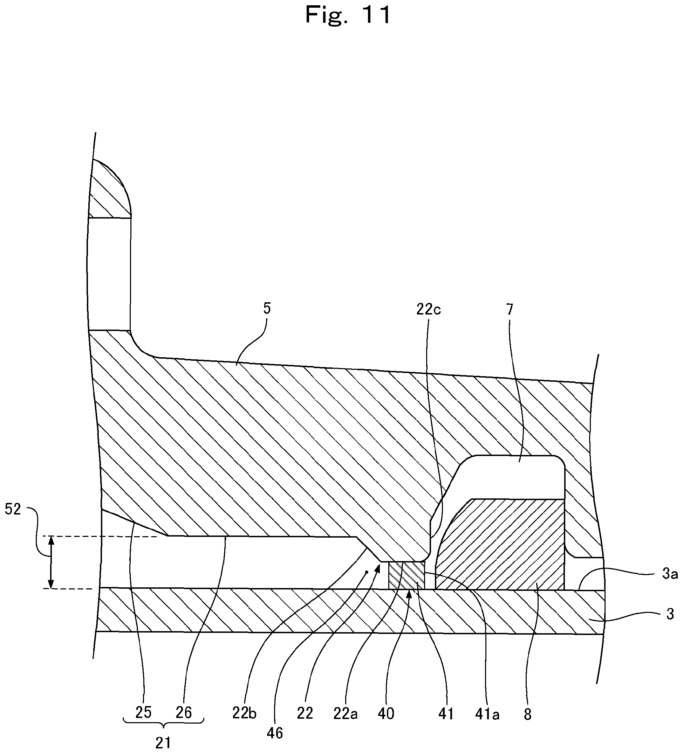

As illustrated in Fig. 10 and Fig. 11, in a state in which the engagement surface 45 of the interval maintaining part 42 is caught against the first end face 22b of the socket protrusion 22, a deeper end face 41a of the ring main body portion 41 is positioned closer to the socket opening end than the second end face 22c of the socket protrusion 22.

A method for joining the first pipe 2 and the second pipe 4 with the aforementioned pipe joint 1 is described hereunder.

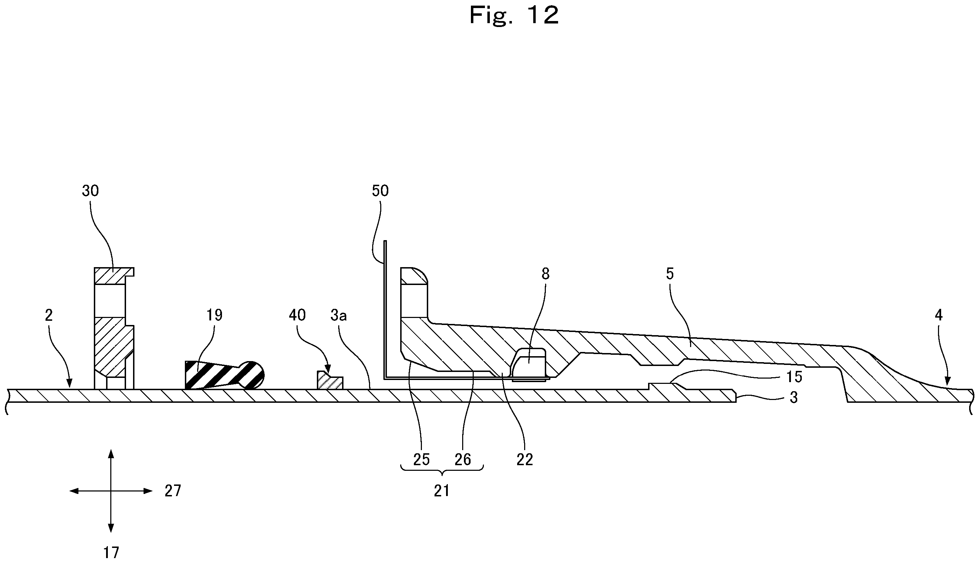

As illustrated in Fig. 12, the ring body 40, the seal ring 19, and the gland 30 are externally fitted to the first pipe 2 in advance. Further, the lock ring 8 is accommodated in the lock ring accommodation groove 7 of the second pipe 4. Then, as illustrated in Fig. 3, the gap 12 of the cut portion 11 of the lock ring 8 is expanded using an expander 13 to thereby expand the diameter of the lock ring 8. Next, as illustrated in Fig. 12, an L-shaped diameter expansion holder 50 is inserted into the cut portion 11 of the lock ring 8 and the expander 13 is removed, to thereby maintain the lock ring 8 in the state in which its diameter is expanded.

Thereafter, the spigot 3 is inserted into the socket 5, and the spigot protrusion 15 is passed through from a position close to the socket opening end of the lock ring 8 to a deeper portion of the socket 52. At such time, since the lock ring 8 is maintained in the state in which its diameter is expanded by the diameter expansion holder 50, the spigot protrusion 15 easily passes through the inner circumference of the lock ring 8.

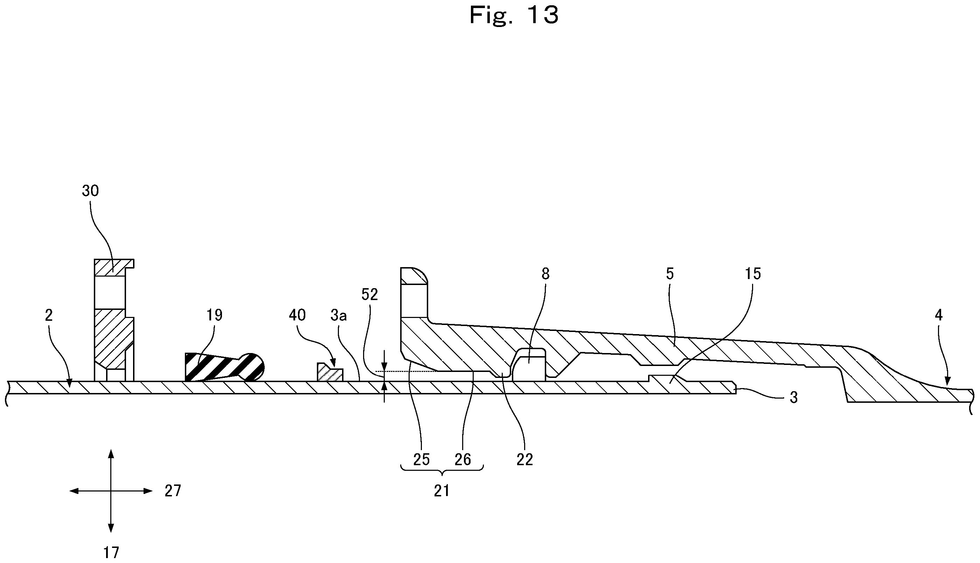

Next, as illustrated in Fig. 13, the diameter expansion holder 50 is removed from the cut portion 11 of the lock ring 8 to thereby cause the gap 12 at the cut portion 11 to be returned to its original size by the elasticity of the lock ring 8, and the lock ring 8 decreases in diameter and clings to the outer circumference of the spigot 3.

At such time, if the pipe axis of the first pipe 2 deviates in the pipe radial direction 17 with respect to the pipe axis of the second pipe 4, there will be a place where the interval 52 between the inner circumferential surface 26 of the socket sealing surface 21 and the outer circumferential surface 3a of the spigot 3 in the pipe radial direction 17 becomes narrower than a predetermined size required in order to push in the seal ring 19. Hereinafter, a place where the interval 52 becomes narrow as described above is referred to as a "narrow place". At a place that is on the opposite side 180° away from the narrow place in the pipe circumference direction 44, the interval 52 is enlarged to a larger size than the predetermined size.

For example, Fig. 13 illustrates a state in which a narrow place has arisen at an upper part of the horizontal pipes 2 and 4. In this case, the interval 52 at a lower part of the pipes 2 and 4 is enlarged to a larger size than the predetermined size.

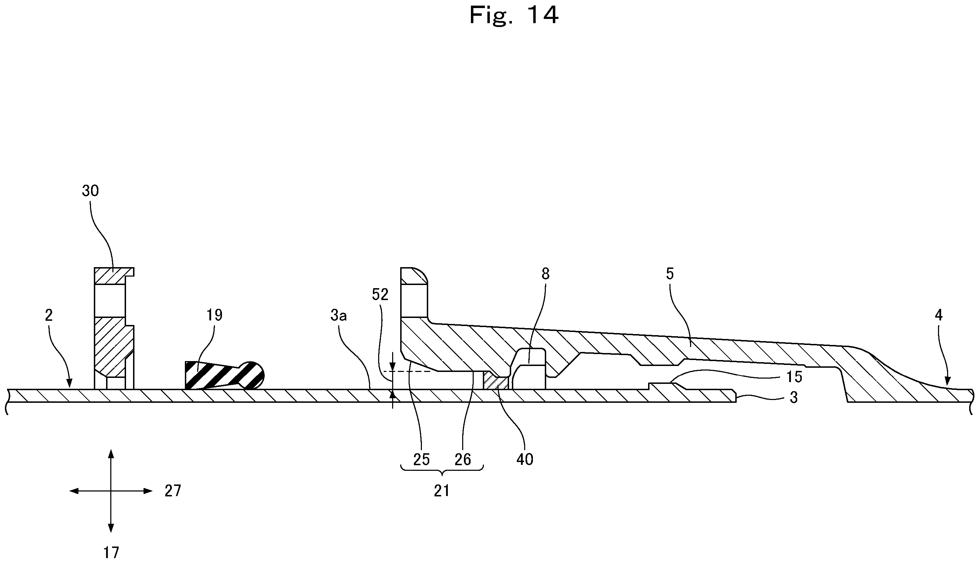

Thereafter, as illustrated in Fig. 14, the ring body 40 is moved in the pipe axis direction 27 and inserted between the socket sealing surface 21 and the outer circumferential surface 3a of the spigot 3 from the opening end of the socket 5, and mounted at the proper position.

By this means, as illustrated in Fig. 10 and Fig. 11, the ring main body portion 41 of the ring body 40 is inserted between the inner circumferential surface 22a of the socket protrusion 22 and the outer circumferential surface 3a of the spigot 3. The engagement surface 45 of the ring body 40 is caught on the first end face 22b of the socket protrusion 22.

At such time, the interval maintaining parts 42 of the ring body 40 are inserted between the inner circumferential surface 26 of the socket sealing surface 21 and the outer circumferential surface 3a of the spigot 3, and thus the interval 52 between the inner circumferential surface 26 of the socket sealing surface 21 and the outer circumferential surface 3a of the spigot 3 in the pipe radial direction 17 is maintained at a predetermined size required in order to push in the seal ring 19.

By this means, even in a case where a narrow place arises in a state in which the spigot 3 is inserted into the socket 5 as illustrated in Fig. 13 that is described above, thereafter, by mounting the ring body 40 at the proper position as illustrated in Fig. 14 that is described above, the interval 52 between the inner circumferential surface 26 of the socket sealing surface 21 and the outer circumferential surface 3a of the spigot 3 in the pipe radial direction 17 can be maintained at a predetermined size required in order to push in the seal ring 19 over the entire circumference as illustrated in Fig. 10 and Fig. 11.

Because the engagement surface 45 of the ring body 40 is caught on the first end face 22b of the socket protrusion 22, the ring body 40 is mounted at the proper position, and the position of the ring body 40 does not deviate further into a deeper portion of the socket 5 than the proper position.

Thereafter, the seal ring 19 is inserted between the socket sealing surface 21 and the outer circumferential surface 3a of the spigot 3 from the opening end part of the socket 5, the gland 30 is connected to the opening end part of the socket 5 using the bolts 33 and the nuts 34, and the bolts 33 and the nuts 34 are tightened until the contact portion 32 of the gland 30 comes into contact with the opening end face 24 of the socket 5.

At such time, as described above, because the interval 52 between the inner circumferential surface 26 of the socket sealing surface 21 and the outer circumferential surface 3a of the spigot 3 is being maintained at the predetermined size required in order to push in the seal ring 19, when the seal ring 19 is pushed in between the socket sealing surface 21 and the outer circumferential surface 3a of the spigot 3, the seal ring 19 is not excessively compressed in the pipe radial direction 17. Thus, the seal ring 19 can be easily pushed in between the socket sealing surface 21 and the outer circumferential surface 3a of the spigot 3 from the opening end part of the socket 5.

Therefore, as illustrated in Fig. 1 and Fig. 2, by mounting the seal ring 19 when joining the first pipe 2 and the second pipe 4, the first pipe 2 is centered with respect to the second pipe 4, and the pipe axis of the first pipe 2 coincides with the pipe axis of the second pipe 4. In the centered state, a slight clearance is formed approximately uniformly over the entire circumference between the outer circumferential surface of the ring main body portion 41 of the ring body 40 and the inner circumferential surface 22a of the socket protrusion 22 and between the outer circumferential surface of the interval maintaining parts 42 and the inner circumferential surface 26 of the socket sealing surface 21.

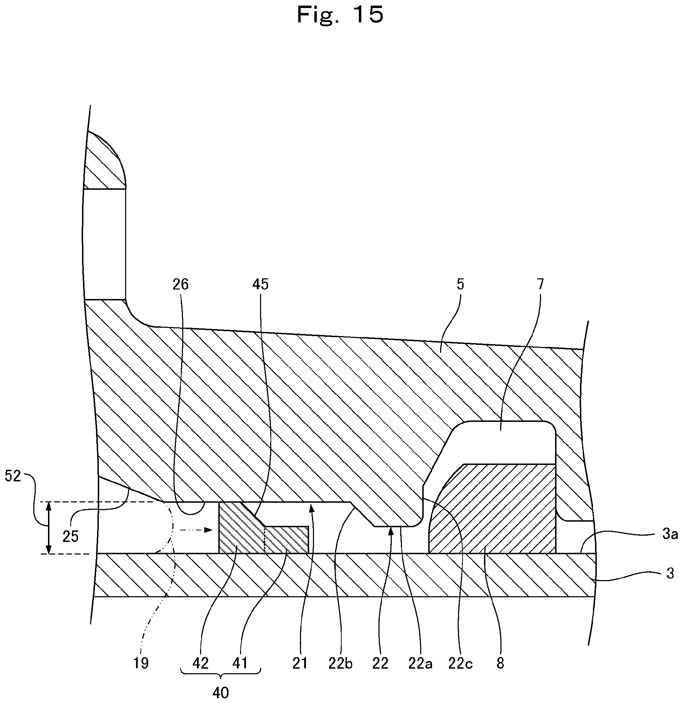

In the method for joining the pipes 2 and 4 using the ring body 40 described above, when the ring body 40 is inserted between the socket sealing surface 21 and the outer circumferential surface 3a of the spigot 3, as illustrated in Fig. 15, in some cases the insertion amount of the ring body 40 may be insufficient and consequently the ring main body portion 41 does not reach the space between the inner circumferential surface 22a of the socket protrusion 22 and the outer circumferential surface 3a of the spigot **3,** and is instead arranged between the inner circumferential surface 26 of the socket sealing surface 21 and the outer circumferential surface 3a of the spigot 3 at a location further toward the opening end than the socket protrusion 22. Even in such a case, because the interval maintaining parts 42 are inserted between the inner circumferential surface 26 of the socket sealing surface 21 and the outer circumferential surface 3a of the spigot 3, the interval 52 between the inner circumferential surface 26 of the socket sealing surface 21 and the outer circumferential surface 3a of the spigot 3 in the pipe radial direction 17 is maintained at the predetermined size required in order to push in the seal ring 19.

Therefore, even in a case where the insertion amount of the ring body 40 is insufficient, when pushing the seal ring 19 in between the socket sealing surface 21 and the outer circumferential surface 3a of the spigot **3,** the seal ring 19 is not excessively compressed in the pipe radial direction 17 and the seal ring 19 can be easily pushed in between the socket sealing surface 21 and the outer circumferential surface 3a of the spigot 3 from the opening end part of the socket 5.

Even in a case where the insertion amount of the ring body 40 is insufficient as illustrated in Fig. 15, by pushing in the seal ring 19 between the socket sealing surface 21 and the outer circumferential surface 3a of the spigot 3, the ring body 40 is pushed into a deeper portion of the socket 5 by the seal ring 19 until the ring main body portion 41 reaches the space between the inner circumferential surface 22a of the socket protrusion 22 and the outer circumferential surface 3a of the spigot 3.

As illustrated in Fig. 10 and Fig. 11, when the ring body 40 is mounted at the proper position, the engagement surface 45 of the interval maintaining part 42 is caught on the first end face 22b of the socket protrusion 22, and the deeper end face 41a of the ring main body portion 41 is positioned closer to the socket opening end than the second end face 22c of the socket protrusion 22. Therefore, contact between the ring main body portion 41 and the lock ring 8 is prevented, and occurrence of damage to the ring main body portion 41 can be prevented.

In the first embodiment described above, as illustrated in Fig. 13, a case where a narrow place arises at an upper part of the horizontal pipes 2 and 4, and the interval 52 at a lower part of the pipes 2 and 4 is enlarged to a larger size than the predetermined size is described as an example. However, the same operations and advantageous effects are also obtained in a case where a narrow place arises in a region other than the upper part (for example, the lower part) of the horizontal pipes 2 and 4, and the interval 52 is enlarged to a larger size than the predetermined size in a region other than the lower part (for example, the upper part) of the pipes 2 and 4.

### (Second Embodiment)

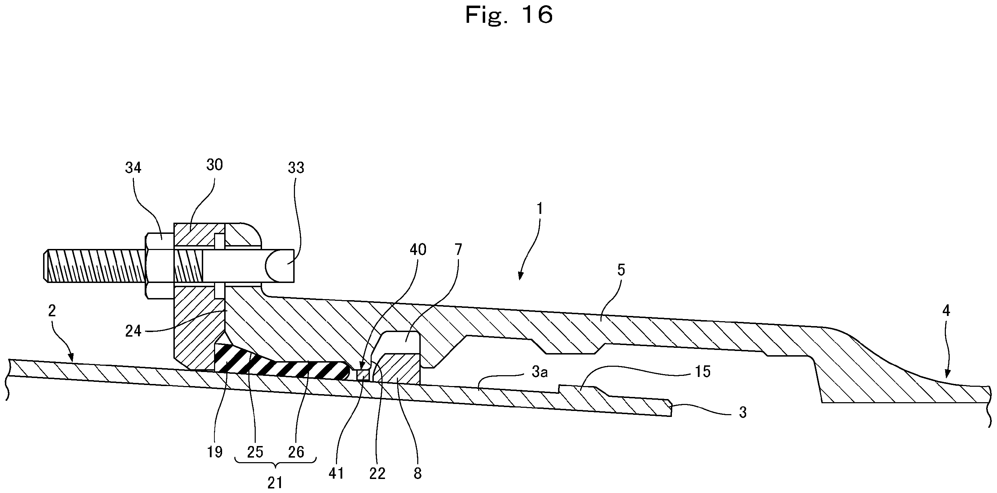

In the foregoing first embodiment, as illustrated in Fig. 2, a case where the first pipe 2 is joined to the second pipe 4 in a straight condition was described. In contrast, in the second embodiment described hereunder, a case is described in which the first pipe 2 is bent upward and joined to the horizontal second pipe 4 as illustrated in Fig. 16.

As illustrated in Fig. 14, the spigot 3 is inserted into the socket 5, and thereafter the ring body 40 is moved in the pipe axis direction 27 and inserted between the socket sealing surface 21 and the outer circumferential surface 3a of the spigot 3 from the opening end of the socket 5 and mounted at the proper position.

Thus, as illustrated in Fig. 10 and Fig. 11, the ring main body portion 41 of the ring body 40 is inserted between the inner circumferential surface 22a of the socket protrusion 22 and the outer circumferential surface 3a of the spigot 3, and the engagement surface 45 of the ring body 40 is caught on the first end face 22b of the socket protrusion 22.

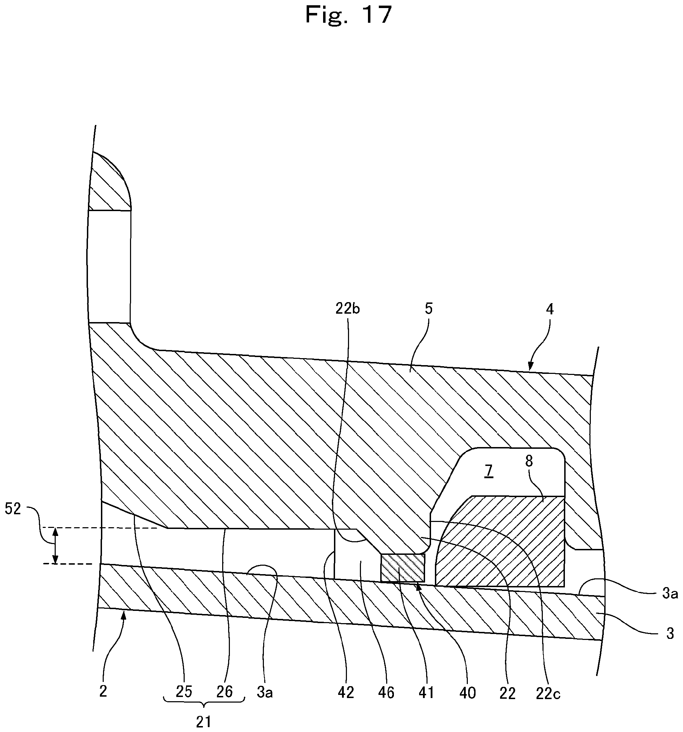

Thereafter, as illustrated in Fig. 17, the first pipe 2 is bent upward with respect to the horizontal second pipe 4. By this means, the interval 52 between the inner circumferential surface 26 of the socket sealing surface 21 and the outer circumferential surface 3a of the spigot 3 becomes narrower than the predetermined size at the upper part of the pipes 2 and 4 and becomes wider than the predetermined size at the lower part of the pipes 2 and 4.

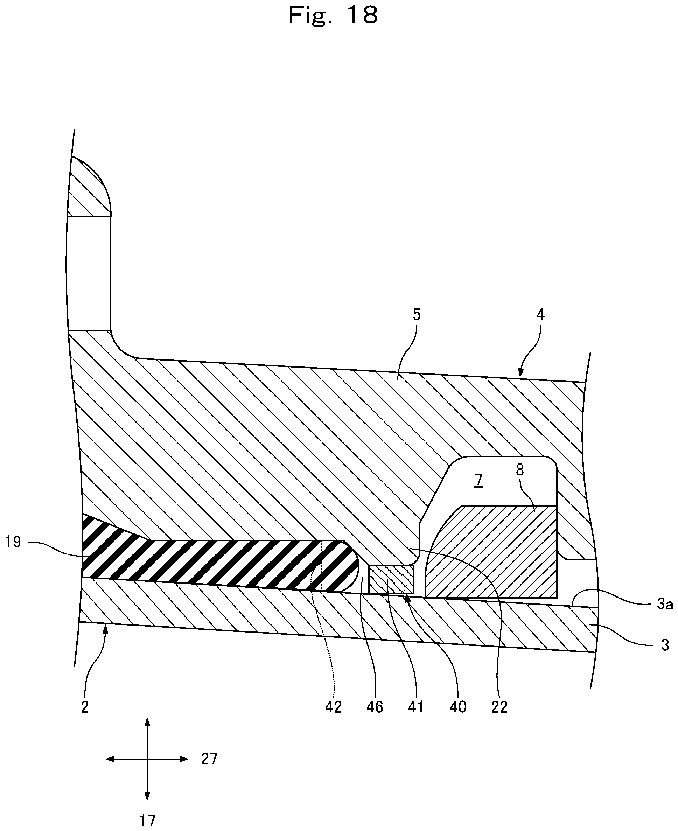

Thereafter, the seal ring 19 is pushed in between the socket sealing surface 21 and the outer circumferential surface 3a of the spigot 3 from the opening end part of the socket 5. At such time, as illustrated in Fig. 18, even if the seal ring 19 is excessively compressed in the pipe radial direction 17 at the upper part of the pipes 2 and 4, the excessively compressed portion of the seal ring 19 enters the escape space 46 of the ring body 40 so that a situation in which the seal ring 19 is pushed in insufficiently can be prevented.

Although in the second embodiment a case where the first pipe 2 is bent upward with respect to the horizontal second pipe 4 is described as an example, the same operations and advantageous effects are also obtained in a case where the first pipe 2 is bent downwards (or in another direction) with respect to the horizontal second pipe 4.

### (Third Embodiment)

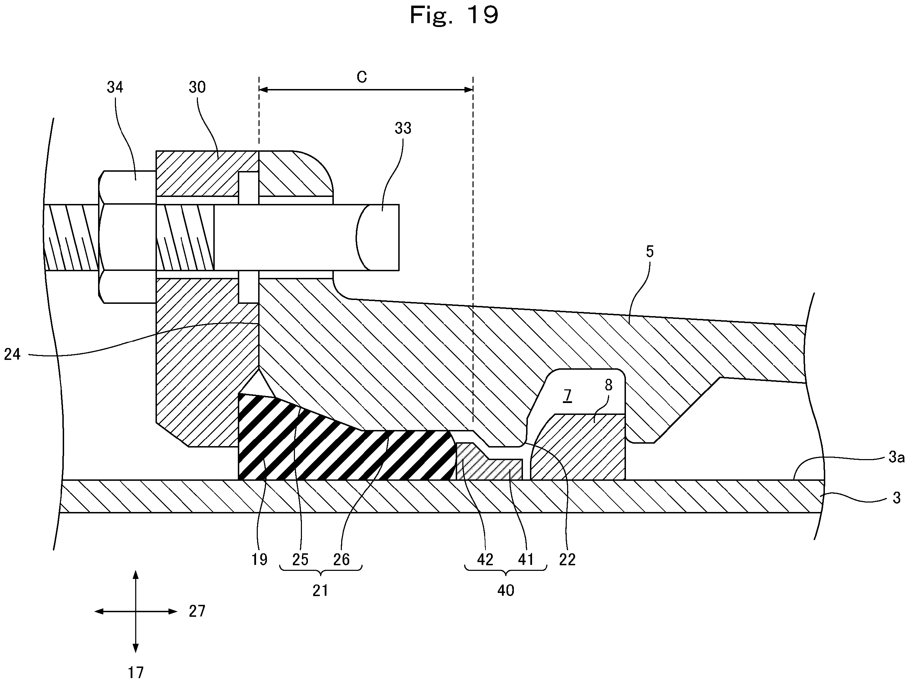

In the foregoing first embodiment, as illustrated in Fig. 1, a configuration is adopted so that when the ring body 40 is inserted as far as the proper position, a clearance is formed between the ring body 40 and the seal ring 19. In contrast, in the third embodiment described hereunder, as illustrated in Fig. 19, a configuration is adopted in which a distance C from the opening end face 24 of the socket 5 to the socket protrusion 22 is shortened compared to the first embodiment, so that the seal ring 19 comes in contact with the ring body 40 when the ring body 40 is inserted as far as the proper position.

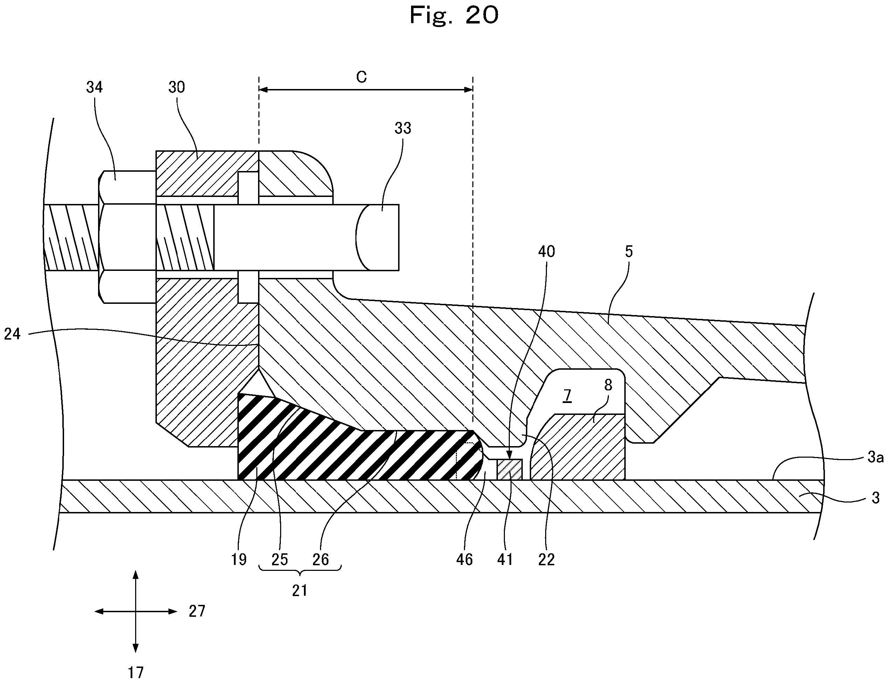

In this case, the seal ring 19 is compressed in the pipe radial direction 17, and is also sandwiched between the interval maintaining parts 42 of the ring body 40 and the gland 30 and thereby compressed in the pipe axis direction 27. At such time, as illustrated in Fig. 20, because the escape space 46 is formed in the ring body 40, a sufficiently wide space necessary to prevent excessive compression of the seal ring 19 is secured between the socket sealing surface 21 and the outer circumferential surface 3a of the spigot **3.** Accordingly, by the distal end portion of the seal ring 19 entering into the escape space 46 of the ring body 40, it is possible to prevent the seal ring 19 from being excessively compressed between the socket sealing surface 21 and the outer circumferential surface 3a of the spigot 3.

By this means, in addition to preventing excessive compression of the seal ring 19 as described above, in comparison to the first embodiment, the distance C from the opening end face 24 of the socket 5 to the socket protrusion 22 can be shortened, and the length of the socket 5 in the pipe axis direction 27 can be shortened.

Although in each of the embodiments described above a configuration is adopted in which the ring body 40 is split at one place, a configuration may also be adopted in which the ring body 40 is divided into a plurality of arc-shaped ring pieces, and adjacent ring pieces are connected together with a connecting member to form the annular ring body 40.

## Claims

1. A ring body which is to be provided in a pipe joint, the pipe joint comprising:
a spigot formed in a first pipe;
a socket formed in a second pipe;
a lock ring accommodation groove formed in an inner circumference of the socket;
a lock ring accommodated in the lock ring accommodation groove; and
a seal ring which, at a location that is closer to an opening end of the socket than the lock ring, is compressed in a pipe radial direction to seal a space between an outer circumference of the spigot and the inner circumference of the socket,
the socket having, at the inner circumference, a socket sealing surface with which an outer circumferential surface of the seal ring contacts with pressure over the entire circumference, and a socket protrusion that protrudes inward in the pipe radial direction from a deeper portion of the socket sealing surface,
an inner diameter of the socket sealing surface being larger than an inner diameter of the socket protrusion,
a spigot engagement portion being formed at the outer circumference of the spigot, and
in a state in which the spigot is inserted in the socket, separation of the spigot from the socket can be prevented by the spigot engagement portion being caught on the lock ring from a deeper portion of the socket in a separation direction of the spigot,
the ring body comprising:
an annular ring main body portion that can be inserted between an inner circumferential surface of the socket protrusion and an outer circumferential surface of the spigot; and
a plurality of interval maintaining parts that can be inserted between the socket sealing surface and the outer circumferential surface of the spigot, wherein
the plurality of interval maintaining parts are provided in the ring main body portion at predetermined intervals in a pipe circumference direction,
by the plurality of interval maintaining parts being inserted between the socket sealing surface and the outer circumferential surface of the spigot, the plurality of interval maintaining parts maintain an interval between the socket sealing surface and the outer circumferential surface of the spigot in the pipe radial direction at a predetermined size that allows the seal ring to be pushed in, and
an escape space into which a distal end portion of the seal ring that is compressed can enter is formed at a location which is between one interval maintaining part and another interval maintaining part that are adjacent in the pipe circumference direction and which is closer to a socket opening end than the ring main body portion.

2. The ring body according to claim 1, wherein
an outer diameter of the interval maintaining part is larger than an outer diameter of the ring main body portion,
the interval maintaining part has an engagement surface which is caught on the socket protrusion in an insertion direction of the spigot, and
the engagement surface projects outward in the pipe radial direction from an outer circumferential surface of the ring main body portion.

3. The ring body according to claim 2, wherein
in a state in which the engagement surface of the interval maintaining part is caught on the socket protrusion, a deeper end of the ring main body portion in a pipe axis direction is positioned closer to the socket opening end than a deeper end of the socket protrusion.

4. A pipe joint comprising the ring body according to any one of claim 1 to claim 3, the pipe joint having:
a spigot formed in a first pipe;
a socket formed in a second pipe;
a lock ring accommodation groove formed in an inner circumference of the socket;
a lock ring accommodated in the lock ring accommodation groove; and
a seal ring which, at a location that is closer to an opening end of the socket than the lock ring, is compressed in a pipe radial direction to seal a space between an outer circumference of the spigot and the inner circumference of the socket, wherein
the socket has, at the inner circumference, a socket sealing surface with which an outer circumferential surface of the seal ring contacts with pressure over the entire circumference, and a socket protrusion that protrudes inward in the pipe radial direction from a deeper portion of the socket sealing surface,
an inner diameter of the socket sealing surface is larger than an inner diameter of the socket protrusion,
a spigot engagement portion is formed at the outer circumference of the spigot,
in a state in which the spigot is inserted in the socket, separation of the spigot from the socket can be prevented by the spigot engagement portion being caught on the lock ring from a deeper portion of the socket in a separation direction of the spigot, and
the ring body is provided between the lock ring and the seal ring.

5. The pipe joint according to claim 4, wherein
the first pipe is joined in a straight condition to the second pipe.

6. The pipe joint according to claim 4, wherein
the first pipe is bent and joined to the second pipe.

7. The pipe joint according to claim 4, wherein
a clearance is formed between the ring body and the seal ring.

8. The pipe joint according to claim 4, wherein
the seal ring contacts the ring body.

9. A method for joining pipes using the ring body according to any one of claim 1 to claim 3, comprising:
accommodating a lock ring in a lock ring accommodation groove;
inserting a spigot into a socket, and passing a spigot engagement portion into a deeper portion of the socket from a position close to a socket opening end of the lock ring;
inserting the ring body between a socket sealing surface and an outer circumferential surface of the spigot from an opening end of the socket; and
pushing a seal ring in between the socket sealing surface and the outer circumferential surface of the spigot from the opening end of the socket.
